# NEUE EUROPÄISCHE PATENTSCHRIFT

(11) **EP 3 540 547 B2**
(45) Veröffentlichungstag und Bekanntmachung des Hinweises auf die Entscheidung über den Einspruch: **01.01.2025**
(45) Hinweis auf die Patenterteilung: 20.07.2022
(21) Anmeldenummer: 19156968.0
(22) Anmeldetag: 13.02.2019
(51) Int. Cl.: G05B 23/02, B65G 1/00

(54) **VERFAHREN ZUR INSTANDHALTUNG EINES AUTOMATISIERTEN FÖRDERSYSTEMS UND ENTSPRECHENDES FÖRDERSYSTEM**
METHOD FOR MAINTENANCE OF AN AUTOMATED CONVEYOR SYSTEM AND CONVEYOR SYSTEM
PROCÉDÉ DE MAINTENANCE D'UN SYSTÈME DE TRANSPORT AUTOMATISÉ ET SYSTÈME DE TRANSPORT CORRESPONDANT

(30) Priorität: 13.03.2018 DE 102018203814
(43) Veröffentlichungstag der Anmeldung: 18.09.2019
(60) Teilanmeldung: 22178360.8
(73) Patentinhaber: Gebhardt Fördertechnik GmbH, D-74889 Sinsheim (DE)
(72) Erfinder: Eder, Jörg, 67661 Kaiserslautern (DE); Gebhardt, Marco, 74889 Sinsheim (DE)
(74) Vertreter: Ullrich & Naumann PartG mbB

(56) Entgegenhaltungen:
- EP-A1- 3 121 664
- EP-A1- 3 187 948
- WO-A2-2008/070678
- US-A1- 2013 293 160

## Beschreibung

Die Erfindung betrifft ein Verfahren zur Funktionsüberwachung eines automatisierten Fördersystems mit mindestens einer Förderstrecke für eine Instandhaltung des Fördersystems.

Des Weiteren betrifft die Erfindung ein entsprechendes automatisiertes Fördersystem.

Verfahren und Systeme der in Rede stehenden Art aus dem Bereich der Intralogistik sind seit Jahren aus der Praxis bekannt. Die Intralogistik zielt auf die Organisation, Steuerung, Durchführung und Optimierung des innerbetrieblichen Materiaflusses, der Informationsströme sowie des Warenumschlags in Industrie, Handel und öffentlichen Einrichtungen ab. Dabei werden in der Intralogistik für die grundlegende, übergeordnete Planung und Steuerung eines Unternehmens häufig Enterprise-Resource-Planning (ERP) Systeme eingesetzt.

ERP-Systeme können neben beispielsweise Personal und Kapital auch die Materialbedarfsplanung und damit die erforderlichen Ein- und Auslagerungen für das Intralogistik-System verwalten. Letztgenannte übermittelt das ERP-System einem Lagerverwaltungssystem (LVS), welches den Lagerplatz einer bestimmten Ware hinterlegt hat. Mit diesen Informationen kann der dem LVS untergeordnete Materialflussrechner (MFR) die unterschiedlichen Maschinen bzw. Fördereinrichtungen des Fördersystems in einem Lager derart koordinieren, dass ein gewünschter Artikel an eine gewünschte Position zu einer gewünschten Zeit befördert wird.

Der MFR steuert Daten- und Informationsflüsse in einem automatischen Intralogistiksystem/Fördersystem zwischen den vorhandenen Fördereinrichtungen und gibt sozusagen zum "richtigen" Zeitpunkt und in der "richtigen" Reihenfolge konkrete "Steuerungsaufträge" an eine zentrale speicherprogrammierbare Steuerungseinrichtung (SPS), die einzelnen - als Fördereinrichtungen des automatisierten Fördersystems dienenden - Maschinen zugeordnet ist. Bei den Maschinen kann es sich zum Beispiel um Fördereinrichtungen einer Förderstrecke oder um ein Regalbediengerät (RBG) handeln.

Die zentrale SPS koordiniert dann die einzelnen Sensoren und Aktoren in einer Maschine und führt so einen "Steuerungsauftrag" aus. Durch die zentrale SPS wird aus der Vorgabe, wonach beispielsweise ein Regalbediengerät eine bestimmte Kiste an Position "xy" auslagern soll, letztendlich eine tatsächliche koordinierte Bewegung. Ausgeführt wird diese Bewegung schlussendlich von Motoren (in der Intralogistik häufig Elektromotoren), die meist über einen Servoumrichter bzw. einen Frequenzumrichter geregelt und direkt mit Strom versorgt werden können. Der Servoumrichter oder Frequenzumrichter führt in Kombination mit einer untergeordneten, mitfahrenden SPS die Bewegung in Abhängigkeit der zulässigen Maschinenparameter, wie zum Beispiel die Geschwindigkeit, aus.

Im Rahmen eines beispielhaften Anwendungsszenarios, nämlich anhand einer Online-Bestellung bei einem Versandhändler, kann dieser Förderprozess wie folgt verdeutlicht werden. Ein Kunde bestellt auf einer Homepage ein Paar Schuhe. Diese Bestellung wird im ERP System verwaltet und bearbeitet. Sobald verwaltungstechnische Aufgaben wie beispielsweise die Zahlungsmodalitäten geklärt sind, gibt das ERP System den Versand frei. Das LVS ermittelt, dass die bestellten Schuhe im Lager 3 in Gasse 5 gelagert sind. Der Materialflussrechner gibt dem für Gasse 5 zuständigen RBG einen "Steuerungsauftrag", der je nach Auslastung von der - für das RBG in Gasse 5 zuständigen - zentralen SPS sofort abgearbeitet wird oder in einer Auftragsliste hintenangestellt wird. Sobald das Paar Schuhe an der Reihe ist, steuert die zentrale SPS den Antrieb des RGB mit Servoumrichter und mitfahrender, untergeordneter SPS in Verbindung mit einem Absolutwertgeber, so dass die Bewegung des RGB ausgeführt wird, nämlich in Gasse 5 eine Bewegung um beispielsweise 17,25 m nach vorne und 5,82 m nach oben. Sobald diese Position exakt erreicht ist, steuert die zentrale SPS die Aufnahme der Kiste durch das Lastaufnahmemittel. Nach der erfolgreichen Aufnahme steuert die SPS die Bewegung des RBG zu einer Abgabestelle und übergibt dort die Schuhe. Zumeist besteht die Abgabestelle aus einer automatischen Fördertechnik, die wiederum vom MFR gesteuert wird. Genauer gesagt löst der MFR aber wiederum nur einen "Steuerungsauftrag" aus, der von einer zentralen SPS und eventuell einem nachgeschalteten dezentralen Steuermodul in eine konkrete Bewegung einer Motorrolle als Fördereinrichtung überführt wird.

Über verschiedene Scanner erfolgt eine Materialflussverfolgung durch den MFR, so dass der MFR verschiedene Motoren über eine zentrale SPS derart ansprechen kann, dass der Behälter mit den Schuhen am gewünschten Kommissionierarbeitsplatz ankommt. Dort werden zumeist durch einen Mitarbeiter manuell die Schuhe aus dem Behälter in einen Versandkarton gepackt. Über den MFR wird letztendlich der Abtransport dieses Kartons in einen Lieferwagen sichergestellt.

Für die Abstimmung der unterschiedlichen Maschinen bzw. Fördereinrichtungen findet bereits ein umfangreicher Datenverkehr meist auf Basis von Bussystemen wie CAN-Bus statt. Dieser Datenverkehr dient dazu den automatisierten Ablauf des automatisierten Fördersystems zu gewährleisten.

Mit den bekannten Fördersystemen gehen jedoch auch Anforderungen des Intralogistik-Marktes einher, die einen Zielkonflikt darstellen, wonach eine Verbesserung aller Ziele nahezu unmöglich scheint. Die Verfügbarkeit der Fördertechnik soll stetig höher werden und nahezu 100% betragen. Zugleich sollen der Lagerdurchsatz und damit die Dynamik der Fördereinrichtungen der automatisierten Fördersysteme stetig ansteigen. Dabei bedeutet eine Verdoppelung der Dynamik üblicherweise nicht nur eine Halbierung der Lebensdauer von Verschleißteilen, sondern eine Reduktion der Lebensdauer um ein Vielfaches. Daraus resultieren höhere Wartungskosten und Ausfallzeiten, die jedoch ebenfalls zu reduzieren sind. Daraus können erhebliche negative Folgen resultieren, wie zum Beispiel der Stillstand einer Fließbandfertigung, falls einzelne Teile nicht rechtzeitig am Montageplatz zur Verfügung stehen.

Bei einem aus der Praxis bekannten automatisierten Fördersystem ist jedoch problematisch, dass eine Wartung reaktiv erfolgt. Das bedeutet, dass erst nachdem etwaige Fehler und/oder Störungen bereits aufgetreten sind, Analysen der Probleme und ggf. Maßnahmen zur Störungsbeseitigung erfolgen. Dies hat erhebliche Störungs- und Ausfallzeiten des Fördersystems zur Folge.

Die WO 2008/070678 A2 offenbart ein Remote-Förderbandüberwachungssystem zum Überwachen eines Betriebs von Förderbändern an einem ersten Ort. Eine lokale Mensch-Maschine-Schnittstelle (HMI) kann betrieben werden, um Daten zu erfassen und zu speichern, die die Zustände und Betriebseigenschaften der Förderbänder darstellen. Mehrere Computer können an verschiedenen Standorten die Daten über eine Internetverbindung abrufen. Somit können Daten, die sich auf die Betriebszustände der Förderbänder beziehen, von menschlichen Benutzern über Computer an verschiedenen globalen Standorten aus der Ferne konsolidiert und überwacht werden.

Aus der EP 3 187 948 A1 ist ein automatisiertes System und ein Verfahren zur Verwaltung der Produktqualität in Behälterverarbeitungsanlagen bekannt.

Das Dokument EP3 121 664A1 betrifft ein computerimplementiertes Verfahren und ein System zur Überwachung eines motorbetriebenen Transportbands, wobei dies am Beispiel einer Sämaschine beschrieben wird.

Der vorliegenden Erfindung liegt nunmehr die Aufgabe zugrunde, ein Verfahren zur Funktionsüberwachung eines automatisierten Fördersystems der eingangs genannten Art derart auszugestalten und weiterzubilden, dass etwaige Ausfallzeiten des Fördersystems möglichst reduziert bzw. minimiert sind und dabei vorzugweise eine verbesserte und effizientere Wartung des Fördersystems ermöglicht ist. Des Weiteren soll ein entsprechendes automatisiertes Fördersystem angegeben werden.

Erfindungsgemäß wird die voranstehende Aufgabe durch die Merkmale des Anspruchs 1 gelöst.

Die voranstehende Aufgabe ist des Weiteren durch ein automatisiertes Fördersystem mit den Merkmalen des Anspruchs 12 gelöst.
Vorteilhafte Ausgestaltungen der erfindungsgemäßen Lehre sind in den abhängigen Ansprüchen angegeben.

In erfindungsgemäßer Weise ist zunächst erkannt worden, dass es von erheblichem Vorteil ist, wenn im Hinblick auf eine Reduzierung von etwaigen Ausfallzeiten des Fördersystems eine vorausschauende Instandhaltung und Wartung der Fördertechnik realisierbar ist. Erfindungsgemäß ist weiterhin erkannt worden, dass gerade dann die regelmäßig gering zu halten Anschaffungskosten merklich ansteigen würden, wenn hierzu eine Vielzahl von zusätzlichen Sensoren, Datenübertragungseinheiten sowie Auswertungseinheiten in das Fördersystem eingebracht werden müssten.

Die vorliegende Erfindung schlägt daher ein Verfahren vor, bei dem zur Funktionsüberwachung des Fördersystems Fördereinrichtungszustände bestimmt werden, wobei durch Erfassung von Sensor- und/oder Aktordaten der Fördereinrichtungen Systemparameterdaten bereitgestellt werden. Die Sensor- und/oder Aktordaten können dabei auch von ohnehin vorhandener bzw. von für die Funktionalität der Fördertechnik erforderlicher Hardware abgegriffen werden, nämlich von Sensoren und/oder Aktoren, die zur Bewegungssteuerung und/oder Bewegungsregelung der Fördereinrichtung dienen. Die Systemparameterdaten werden erfindungsgemäß zur Bestimmung und/oder Auswertung der Fördereinrichtungszustände an eine zentrale Auswertungseinheit übermittelt.

Folglich ist mit dem erfindungsgemäßen Verfahren und mit dem erfindungsgemäßen automatisierten Fördersystem eine Reduzierung von Ausfallzeiten des Fördersystems möglich. Gerade aufgrund der Auswertung von abgegriffenen Systemparameterdaten können Fördereinrichtungszustände ermittelt werden und davon abhängig diverse erforderliche Instandhaltungsmaßnahmen rechtzeitig ausgelöst werden. Somit ist eine verbesserte und effizientere Wartung des Fördersystems ermöglicht.

In vorteilhafter Weise können die Fördereinrichtungen Motorrollen, Heber, Gurtförderer, Kettenförderer, Zahnriemenförderer und/oder Gliederbandförderer umfassen. Des Weiteren können über eine Motorolle auch mit der Motorrolle über Riemen verbundene Tragrollen berücksichtigt werden. Ferner können die Fördereinrichtungen Tragrollen umfassen, die beispielsweise an einem großen Motor gekoppelt sind für beispielsweise 30 m. Somit werden wichtige Bestandteile einer Förderstrecke überwacht, bei denen eine etwaige Störung und/oder Fehlfunktion die Verfügbarkeit des kompletten Fördersystems beeinträchtigen kann oder gar einen Ausfall des kompletten Fördersystems mit sich bringen kann. Nunmehr kann dem rechtzeitig entgegengewirkt werden.

Erfindungsgemäß umfassen die Steuereinrichtungen mehrere dezentrale Steuermodule In vorteilhafter Weise können die Steuereinrichtungen mindestens eine zentrale Steuereinrichtung umfassen. Sowohl die zentrale Steuereinrichtung als auch die dezentralen Steuermodule können als speicherprogrammierbare Steuereinrichtung ausgeführt sein. Die dezentralen Steuermodule können direkt bei den einzelnen Motorrollen bzw. nahe an der jeweils zugeordneten Motorolle einer Förderstrecke installiert sein und diese ggf. ansteuern.

In weiter vorteilhafter Weise können die dezentralen Steuermodule derart ausgebildet sein, dass auf den dezentralen Steuermodulen ein autonomer und/oder ein nicht-autonomer Betriebsmodus implementiert ist. Die dezentralen Steuermodule können somit zwei Betriebsmodi unterstützen. Dabei ist denkbar, dass ein dezentrales Steuermodul mit einer vordefinierten Anzahl von Lichtschranken und einer vordefinierten Anzahl von Motorrollen verbunden werden kann. Mehrere dezentrale Steuermodule könnten dann untereinander über ein Bus-System (zum Beispiel CAN-Bus) verbunden werden. Dies erlaubt auf raffinierte Weise eine Steuerung wahlweise über eine SPS als zentrale Steuereinrichtung oder im autonomen Betriebsmodus, bei dem die dezentralen Steuermodule miteinander kommunizieren und die Förderstrecke selbstständig steuern können. Im nicht-autonomen Betriebsmodus kann das Steuermodul somit über eine übergeordnete zentrale Steuereinrichtung, zum Beispiel eine SPS, gesteuert werden, so dass ein SPS Relais Modus realisiert ist. Im Konkreten ist denkbar, dass im SPS-Relais Modus das Steuermodul als Relais einer übergeordneten zentralen SPS agiert. Das Steuermodul führt beispielsweise die über ein Bus-System (zum Beispiel den CAN-Bus) empfangenen Befehle aus und meldet den Zustand der Eingänge zurück. Des Weiteren kann der autonome Betrieb möglich sein. Im autonomen Betriebsmodus können die Steuermodule einer Förderstrecke ohne äußere Steuerung (beispielsweise durch eine übergeordnete zentrale SPS) Förderfunktionen wie z.B. einen Stauförderer abbilden. Die Steuermodule können dazu im Rahmen einer vorteilhaften Ausgestaltung hintereinandergeschaltet werden. Jedes Steuermodul könnte beispielsweise dabei bis zu zwei Stauplätze abbilden. Ein Stauplatz wertet eine (konfigurierbare) Stopp-Lichtschranke aus und steuert einen Motor. Zusätzlich könnte eine Start-Lichtschranke konfiguriert werden. Die Übergabe von vorgelagerter bzw. zu nachgelagerter Fördertechnik könnte sowohl über Digital-IO als auch über CAN-Bus erfolgen. Start / Stopp sowie Fehlerzustände der Anlage könnten sowohl über DigitallOs eines Steuermoduls als auch über den CAN-Bus implementiert werden. Weiterhin könnte der Zustand jedes dezentralen Steuermoduls über eine Bus-Schnittstelle (zum Beispiel eine CAN-Bus Schnittstelle) abgerufen werden. Folglich können die Steuermodule miteinander kommunizieren und die Förderstrecke ist im autonomen Betrieb zumindest teilweise selbständig steuerbar.

In einer vorteilhaften Ausgestaltung können die Sensor- und/oder Aktordaten von den dezentralen Steuermodulen erfasst werden. Die Sensor- und/oder Aktordaten bzw. daraus abgeleitete Systemparameterdaten können dann von den dezentralen Steuermodulen bereitgestellt und/oder gespeichert werden, so dass eine Bestimmung und/oder Auswertung von Fördereinrichtungszuständen möglich wird.

Des Weiteren ist auch denkbar, dass die Sensor- und/oder Aktordaten von der zentralen Steuereinrichtung erfasst werden, wobei die Sensor- und/oder Aktordaten bzw. daraus abgeleitete Systemparameterdaten dann von der zentralen Steuereinrichtung bereitgestellt und/oder gespeichert werden.

In vorteilhafter Weise kann von den dezentralen Steuermodulen und/oder von der zentralen Steuereinrichtung eine Verarbeitung der Sensor- und/oder Aktordaten derart durchgeführt werden, dass die erfassten Sensor- und/oder Aktordaten in aufbereiteter, vorgefilterter, reduzierter und/oder konzentrierter Form als Systemparameterdaten bereitgestellt und/oder gespeichert werden.

In einer vorteilhaften Ausgestaltung können die Sensor- und/oder Aktordaten bzw. die Systemparameterdaten von den dezentralen Steuermodulen direkt an die zentrale Auswertungseinheit gesendet werden. Dabei ist denkbar, dass die dezentralen Steuermodule mit einer separaten, vorzugsweisen drahtlosen, Kommunikationsschnittstelle ausgestattet sind, über die die Systemparameterdaten direkt an die zentrale Auswertungseinheit übermittelt werden. Des Weiteren ist denkbar, dass die Sensor- und/oder Aktordaten bzw. die Systemparameterdaten von den dezentralen Steuermodulen indirekt an die zentrale Auswertungseinheit übermittelt werden. Dies könnte zum Beispiel über die übergeordnete, zentrale Steuereinrichtung und/oder über ein oder mehrere weitere dezentrale Steuermodule) erfolgen.

In vorteilhafter Weise können eines oder auch mehrere der dezentralen Steuermodule als Edge Gateway fungieren, wobei die Systemparameterdaten über das Edge Gateway an die zentrale Auswertungseinheit gesendet werden. An dieser Stelle sei darauf hingewiesen, dass unter dem Ausdruck Edge Gateway ein Edge Device im Edge Computing verstanden werden kann. Ein Edge Gateway kann als ein Knotenrechner am Übergang zwischen zwei Netzwerken angesehen werden. Es kann ein Anschlussknoten zwischen einem Ortsnetz und einem Metropolitan Area Network (MAN) sein, oder auch der Übergangsrechner zwischen einem Weitverkehrsnetz und einem Zugangsnetz. Funktional übernimmt das Gateway die Anbindung von Unternehmensnetzen an das Kernnetz. Edge Gateways können die verschiedensten Mobilfunknetze, lokale Netze, Funknetze und Festnetze zu denen sie Schnittstellen besitzen unterstützen. Edge Gateways können WiFi und Ethernet benutzen, über die sie kommunizieren können und können ggf. Industrieprotokolle von CAN-Bus, Modbus, BACnet, SCADA oder ZigBee aggregieren und konvertieren. Unter dem Ausdruck "Edge Gateway" bzw. "Edge Computer" kann ferner ein Gerät verstanden werden, beim dem es sich um eine Form der Speicherprogrammierbaren Steuerung (SPS) handelt, bei der die Verarbeitungselemente näher an den Sensor heranrücken, wodurch die Sensordaten schnell analysiert und gefiltert werden können. Dadurch ist das Gerät als lokaler Controller in der Lage das Datenaufkommen in dezentralen Rechenzentren zu verringern. Dabei unterscheidet sich das Edge Gateway von der herkömmlichen SPS hauptsächlich durch die größere Verarbeitungsfähigkeit von Daten, was durch den Einsatz von Multicore-Prozessoren mit höherer Rechenleistung gewährleistet wird.

In einer vorteilhaften Ausgestaltung können die Systemparameterdaten der Fördereinrichtungen Informationen hinsichtlich Betriebsdauer, Schaltzyklen und/oder Stromaufnahme umfassen. Somit werden Werte für die Betriebsdauer, die Schaltzyklen und/oder die Stromaufnahme gespeichert und ausgewertet werden. Diese Systemparameterdaten können somit als leicht erfassbare Daten abgegriffen werden, da diese Daten meist ohne erheblichen Aufwand bzw. meist ohne zusätzliche komplexe Hardware gewonnen werden können.

In vorteilhafter Weise können die Sensor- und/oder Aktordaten der Fördereinrichtungen bzw. die Systemparameterdaten der Fördereinrichtungen lastabhängig erfasst werden. Dabei kann eine lastabhängige Erfassung bedeuten, dass die Fördereinrichtung bei der Erfassung mit vordefinierter (ggf. unterschiedlicher) Auslastung und/oder Dynamik (zum Beispiel schneller oder langsamer) betrieben und dies bei der Auswertung berücksichtigt wird. Somit kann erkannt werden, wie die Fördereinrichtung bei einer bestimmten, vordefinierten (ggf. erhöhten) Auslastung oder Dynamik reagiert. Des Weiteren könnten vordefinierte zu befördernde Behälter (ggf. mit unterschiedlichem Gewicht) bei der Erfassung berücksichtigt werden. Folglich sind im Rahmen einer Auswertung geeignete und aussagekräftige Ergebnisse hinsichtlich der zu bestimmenden Fördereinrichtungszustände erzielbar.

Erfindungsgemäß werden vorgebbare Prozessparameterdaten zur Bestimmung der Fördereinrichtungszustände an die zentrale Auswertungseinheit übermittelt. Die Prozessparameter werden in vorteilhafter Weise aus einem Lagerverwaltungssystem, einem Materialflussrechner und/oder einer zentralen Steuereinrichtung abgegriffen. Somit können Prozessparameterdaten beispielsweise Informationen hinsichtlich Behältergewicht, bisheriger Wartungsintervalle, letzte Wartung, Wartungshäufigkeit, Materialfluss und/oder Überlastkontrolle umfassen.

Erfindungsgemäß werden - ggf. mit zusätzlicher und/oder ggf. mit bereits vorhandener separater Sensorik - vorgebbare Umgebungsparameterdaten in Bezug auf die Umgebung der Fördereinrichtungen erfasst wobei die Umgebungsparameterdaten zur Bestimmung der Fördereinrichtungszustände an die zentrale Auswertungseinheit übermittelt werden. Zusätzliche Sensorik bzw. separate Sensorik kann hier so verstanden werden, dass darunter Sensoren fallen, die nicht oder nicht direkt zur Bewegungsteuerung und/oder -regelung der Fördereinrichtungen verwendet werden. Vielmehr ist denkbar, dass hier ergänzend Sensoren installiert sind, die Umgebungsparameterdaten wie beispielsweise Temperatur, Luftfeuchtigkeit, Staub etc. messen. Die Erfassung und Berücksichtigung von Umgebungs- bzw. Umwelteinflüssen auf ein automatisiertes Fördersystem erlauben eine effizientere Berechnung und/oder Korrektur von Sensordaten bzw. von Systemparameterdaten. Automatische Intralogistikanlagen bzw. Fördersysteme sind selten Systeme, die abgekoppelt von ihrer Umwelt agieren. Sie sind häufig in agile Umgebungen eingebunden, die veränderlichen Umwelteinflüssen unterliegen. Oft finden sich auch manuell, d.h. vom Mensch, bediente Lagerorte - beispielsweise mit Gabelstapler, Handhubwagen, elektrischen Hubwagen etc. Das Verhalten des Menschen ist in solchen Umgebungen unterschiedlich und nicht zu prognostizieren (Gabelstapler nimmt andere Route, fährt weiter rechts oder links, schneller, langsamer, muss ausweichen etc.). Neben dem Menschen hat auch die Natur Einfluss auf das Fördersystem, insbesondere durch Temperatureinflüsse (Sommer, Winter), Lichteinflüsse (UV-Strahlung blendet Sensoren), Windeinflüsse (z.B. Windlast auf Regalkonstruktionen) etc. Daher kann durch die Erfassung der veränderlichen Umwelteinflüsse eine etwaige Verfälschung in den gewonnenen Systemparameterdaten herausgerechnet werden bzw. bei der Auswertung und Analyse dieser Systemparameterdaten berücksichtigt werden.

Somit ist denkbar, dass die äußeren Einflüsse ggf. separat und unabhängig gemessen werden und einer Analyse/Auswertung in der zentralen Auswertungseinheit zugeführt werden. Folglich sind auf raffinierte Weise wichtige Rückschlüsse für das Fördersystem möglich wie im Folgenden beispielhaft skizziert:
- Bei 35°C Außentemperatur, Windstille und Gabelstaplerverkehr in der Nähe des Regalbediengerätes kommt es zu erhöhten Vibrationen der mechanischen Struktur und dadurch verkürzt sich die Lebensdauer bestimmter Komponenten um "x" Monate.
- Wenn alle Gabelstapler statt links, rechts am Regal vorbeifahren, lässt sich die Fehlerhäufigkeit um "x" % reduzieren.
- Wenn im Sommer ab Juni, die Jalousien bei Fenster "xyz" um 50% heruntergelassen werden, werden die Sensoren der Fördertechnik nicht mehr geblendet und die Verfügbarkeit steigt um "x" %.

Im Rahmen einer vorteilhaften Ausgestaltung ist denkbar, dass Umgebungsparameterdaten über eine entsprechende Schnittstelle zur - ggf. vorhandenen - Haustechnik abgegriffen werden. Somit kann auf einfache und effiziente Weise eine Vielzahl an bereits vorhandener Informationen abgegriffen werden.

In einer vorteilhaften Ausgestaltung kann ein paralleles, vorzugsweise drahtloses, Kommunikationsnetzwerk zur Übermittlung von Parameterdaten an die zentrale Auswertungseinheit verwendet werden. Dies ist beispielsweise für die Systemparameterdaten, die Prozessparameterdaten und/oder die Umgebungsparameterdaten denkbar. Folglich könnte in vorteilhafter Weise ein paralleles, funkbasiertes Netzwerk verwendet werden, um die für den Betrieb notwendige Netzwerkstruktur nicht mit Diagnose- und Analysedaten zu überlasten. Die Diagnose- und Analysedaten, die die Systemparameterdaten, Prozessparameterdaten und/oder Umgebungsparameterdaten umfassen können, sind nicht so zeitkritisch wie die tatsächlichen Steuerdaten des automatisierten Fördersystems. Hinsichtlich der Diagnose- und Analysedaten ist es denkbar, dass diese Daten mehrfach versendet werden, falls die Verbindung nicht stabil genug sein sollte und Pakete möglicherweise verloren gehen. Dies ist für die steuernden Steuerdaten des Fördersystems nicht denkbar. Im Hinblick auf eine kosteneffiziente Lösung ist es denkbar, dass das parallele drahtlose Kommunikationsnetzwerk als Mesh-Netzwerk ausgeführt oder mittels Bluetooth-Low-Energy-Technik realisiert ist. Somit kann auf raffinierte Weise ein kosteneffizientes paralleles Kommunikationsnetzwerk für eine unkritische Kommunikation geschaffen werden. Insbesondere die Auslegung als Mesh-Netzwerk ist von besonderem Vorteil, da so jedes weitere Modul die Funkreichweite erhöht und ein sehr weitläufiges Fördersystem auf diese Weise mit möglichst wenig zentraler Infrastruktur zu erfassen ist.

Erfindungsgemäß ist die zentrale Auswertungseinheit somit in der Lage, basierend auf den empfangenen Parameterdaten, die Fördereinrichtungszustände von den Fördereinrichtungen mittels einer Analysefunktion, die physikalische Zusammenhänge in den Parameterdaten berücksichtigt, ermitteln, auswerten und/oder bewerten, wobei abhängig von einem von der Analysefunktion berechneten Analyseergebnis eine vorgebbare Instandhaltungsmaßnahme eingeleitet wird. Die von der zentralen Auswertungseinheit empfangenen und berücksichtigten Parameterdaten umfassen dabei Systemparameterdaten, Prozessparameterdaten und Umgebungsparameterdaten. Abhängig von dem ermittelten Analyseergebnis der Analysefunktion kann im Rahmen der vorgebbaren Instandhaltungsmaßnahme ein steuernder Einfluss auf das Fördersystem erfolgen. Folglich ist damit eine steuernde und damit aktive Einflussnahme der zentralen Auswertungseinheit auf das automatisierte Fördersystem möglich. In vorteilhafter Weise sind zum Beispiel folgende Instandhaltungsmaßnahmen denkbar:
- Den Durchsatz/Dynamik begrenzen, falls bei höheren Durchsätzen Störungen (z.B. durch Ausfälle) zu erwarten sind. Andere Möglichkeit ist die Vorhersage einer Störung vor dem nächstmöglichen (u.U. geplanten) Wartungstermin.
- Automatische Anpassung von Instandhaltungsintervallen.
- Von Ausfall bedrohte Streckenabschnitte teilweise oder ganz zu umfahren, indem eine alternative Route im Fördersystem ausgewählt wird.
- Erkennen, dass manche Streckenabschnitte mehr belastet sind als andere und deshalb häufiger gewartet werden müssten. Falls es der Streckenverlauf zulässt könnte die zentrale Auswertungseinheit für eine Umverteilung sorgen und eine gleichmäßige Auslastung erreichen.
- Ausfallwahrscheinlichkeiten anzeigen um selbst steuernd einzugreifen oder einem Bediener Hinweise zu geben, Veränderungen vorzunehmen.
- Materialflusssteuerung nach Restlaufzeit bis Wartung (Dynamikeinstellung oder Streckenverlauf).

In einer vorteilhaften Ausgestaltung kann eine Zustandserfassung der Fördereinrichtungen, ein Zustandsvergleich der Fördereinrichtungen und eine Diagnose der Fördereinrichtungen des Fördersystems durchgeführt werden. Stetige Fördersysteme - Stetigförderer - können häufig pausenlos laufen bzw. können pausenlos einsatzbereit sein, so dass sie ein ankommendes Datenpaket sofort mittels eines dezentralen Steuermoduls selbsttätig weitergleitet wird. Daher bietet sich eine kontinuierliche Überwachung der Fördereinrichtungen des Fördersystems an. Neben der Erfassung und Auswertung von System- und Komponentendaten als Parameterdaten wie z.B. Temperatur, Schwingung, Störungen, Stromverbrauch, die Bestandteil des Lieferumfangs des Fördersystemanbieters sind, könnten auch Temperatursensoren eines bestehenden Heizungssystems des Fördersystembetreibers eingebunden werden. Der Zustandsvergleich stellt den Vergleich des Ist-Zustandes mit einem vorgegebenen Referenzwert dar. Dieser Referenzwert kann sowohl ein einzuhaltender Sollwert als auch ein nicht zu überschreitender Grenzwert sein. Der Sollwert kann je nach untersuchtem Parameter bei der Maschinenabnahme ermittelt und/oder durch vorgegebene Größen festgelegt werden. Stetigförderer sind ein Massenprodukt, für das umfangreiche Daten aus verschiedenen Projekten vorliegen können, die ebenso als Referenzwert herangezogen werden könnten. Im Rahmen der Diagnose können anhand der Resultate des Zustandsvergleichs eventuell vorhandene Fehler möglichst früh lokalisiert und deren Ursache ermittelt werden, so dass erforderliche Instandhaltungsmaßnahmen beizeiten geplant werden können. Die Diagnose kann beispielsweise auf einem lokalen Computer als zentrale Auswertungseinheit in einer Logistikhalle erfolgen. Die Parameterdaten können beispielsweise über das ProfiNet und einem Switch sowie über WLAN von den Fördereinrichtungen zum lokalen Computer als zentrale Auswertungseinheit gelangen. Weiter aufbereitete Daten und/oder Ergebnisse können dann in der Cloud abgelegt werden.

In vorteilhafter Weise kann die zentrale Auswertungseinheit in Form einer oder mehrerer Softwarekomponenten implementiert sein, wobei die Softwarekomponenten die zentrale Auswertungseinheit über einen zentralen Rechner und/oder über eine Cloud-Plattform bereitstellen.

In einer vorteilhaften Ausgestaltung kann eine zeitsynchrone Datenerfassung und Aufzeichnung der Parameterdaten erfolgen. Automatische Fördersysteme bestehen aus vielen einzelnen Komponenten und vielen unterschiedlichen Steuerungen und Maschinen/Fördereinrichtungen. Im Rahmen von vorteilhaften Ausgestaltungen der Erfindung können möglichst viele Daten dieser Komponenten bzw. Fördereinrichtungen mittels einer zentralen Auswertungseinheit bzw. mit einer Cloud-Plattform für Predictive Maintenance und/oder Condition Monitoring erfasst und verarbeitet werden. Aus der Fusion der verschiedenen Parameterdaten können Rückschlüsse in Bezug auf den Zustand des Fördersystems gezogen werden. Für eine geeignete Analyse können die jeweiligen Komponenten des Fördersystems ihre Events mit einem synchronisierten Zeitstempel melden, so dass mittels Algorithmen für Maschinelles Lernen und/oder Künstlicher Intelligenz eine geeignete Datenanalyse implementierbar ist. In der Realität parallel auftretende Ereignisse kommen somit nicht mit unterschiedlichen Zeitstempeln bei der Analysefunktion an. In vorteilhafter Weise kann dazu ein zentraler Zeitdienst verwendet werden, der allen angeschlossenen Komponenten synchrone und passende Zeitstempel liefert. Dies könnte ein Zeitserver im Internet, die zentrale Auswertungseinheit selbst und/oder ein Zeitserver im Netzwerk des Fördersystems sein, der sich in regelmäßigen Abständen mit einem externen Zeitserver synchronisiert.

In vorteilhafter Weise können die zu synchronisierende Komponenten zum Beispiel folgendes umfassen: Steuerungen, dezentrale Steuermodule, Motorregler, Lagerverwaltungssoftware, Materialflussrechner, Visualisierungssysteme, Störmeldungen.

Die Erfindung und/oder vorteilhafte Ausführungsformen der Erfindung können einen oder mehrere der folgenden Vorteile liefern:
- Verfügbarkeitserhöhung des Fördersystems
- Reduktion der Instandhaltungskosten
- Produktverbesserungen
- Bedarfsorientierte Ersatzteilbereitstellung
- Bedarfsorientierter Einsatz von Servicepersonal, beispielsweise für Reparaturen und/oder Störungsbeseitigungen
- Digitale Unterstützung von Service- und Instandhaltungspersonal

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht einen möglichen Datenaustausch zwischen einzelnen Komponenten eines automatisierten Fördersystems im Rahmen eines Ausführungsbeispiels der Erfindung,
- Fig. 2: in einer schematischen Ansicht ein automatisiertes Fördersystem gemäß einem Ausführungsbeispiel der Erfindung,
- Fig. 3: in einer schematischen Ansicht ein dezentrales Steuermodul für zwei Motorrollen eines automatisierten Fördersystems gemäß einem Ausführungsbeispiel der Erfindung, und
- Fig. 4: in einer schematischen Ansicht mehrere dezentrale Steuermodule für mehrere Motorrollen eines automatisierten Fördersystems gemäß einem Ausführungsbeispiel der Erfindung.

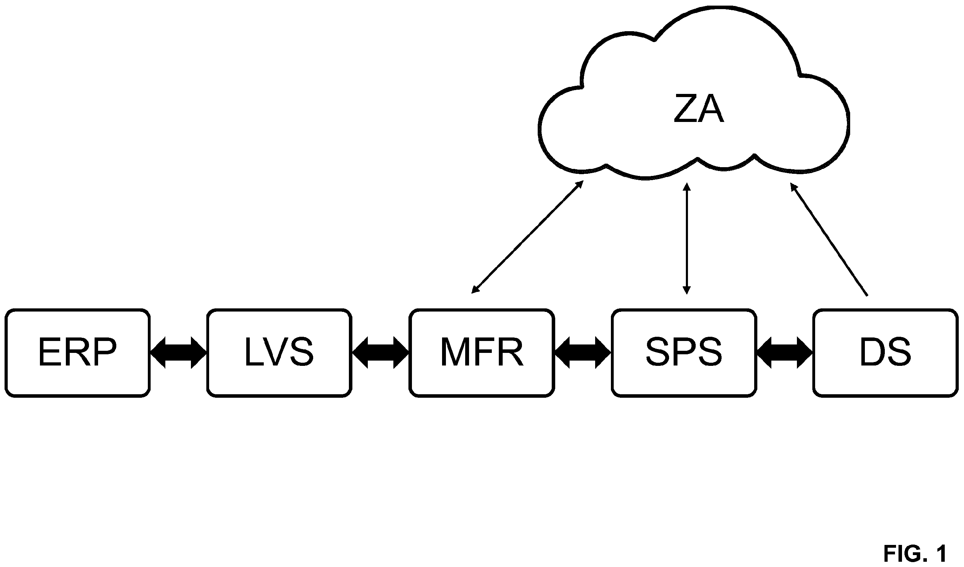

Fig. 1 zeigt in einer schematischen Ansicht einen möglichen Datenaustausch zwischen einzelnen Komponenten eines automatisierten Fördersystems im Rahmen eines Ausführungsbeispiels der Erfindung.

Für die Abstimmung und Steuerung der unterschiedlichen Fördereinrichtungen des automatisierten Fördersystems findet - ähnlich wie bei herkömmlichen Fördersystemen - ein umfangreicher Datenverkehr meist auf Basis von Bussystemen wie CAN-Bus statt. Dieser Datenverkehr dient dazu den automatisierten Ablauf des Fördersystems sicherzustellen. Im Gegensatz zu herkömmlichen automatisierten Fördersystemen findet bei dem in Fig. 1 illustrierten Fördersystem gemäß einem Ausführungsbeispiel der Erfindung zusätzlich auch eine Speicherung und Aufbereitung dieser Daten, gegebenenfalls in Verbindung mit anderen Messdaten, für eine Auswertung hinsichtlich vorausschauender Wartung des Fördersystems statt.

Dabei können moderne ERP-Systeme die Aufgabe eines Lagerverwaltungssystems (LVS) und eines Materialflussrechners (MFR) teilweise kombiniert in einer Software abbilden.

Fig. 1 zeigt, dass ein stetiger Datenaustausch zwischen Lageraufträgen und Rückmeldungen durch Sensoren stattfindet. Dieser vorhandene Datenfluss wird gezielt in Teilen an eine zentrale Auswertungseinheit übermittelt und dort gespeichert, um in Kombination mit zusätzlichen Messdaten den Zustand des Fördersystems, insbesondere der einzelnen Fördereinrichtungen, zu überwachen.

Im Konkreten zeigt Fig. 1 die wechselseitige Kommunikation zwischen folgenden Komponenten:
- Enterprise Resource Planning System (ERP),
- Lagerverwaltungssystem (LVS),
- Materialflussrechner (MFR),
- zentrale Steuereinrichtung in Form einer speicherprogrammierbaren Steuerung (SPS), und
- dezentralem Steuermodul (DS).

Des Weiteren kann eine Kommunikation mit einer zentralen Auswertungseinheit (ZA) stattfinden, um eine vorausschauende Instandhaltung für das automatisierte Fördersystem zu ermöglichen. Demnach ist ein Datenaustausch zwischen MFR und ZA und zwischen SPS und ZA sowie zwischen DS und ZA möglich.

Bei der zentralen Auswertungseinheit (ZA) kann es sich um eine Softwarekomponente handeln, die auf einem zentralen Rechner in der Logistikhalle des Fördersystems implementiert ist. Des Weiteren kann es sich bei der zentralen Auswertungseinheit um eine Softwarekomponente handeln, die mittels/auf/in einer Cloud-Plattform bereitgestellt wird. Schließlich ist denkbar, dass es sich bei der zentralen Auswertungseinheit um mehrere Softwarekomponenten handelt, die in verteilter Form sowohl auf einem zentralen Rechner in der Logistikhalle als auch auf der Cloud-Plattform implementiert sind und diese Softwarekomponenten miteinander kommunizieren. Somit können beispielsweise aufwändige Analysefunktionen und Auswertungsfunktionen auf die Cloud-Plattform verlagert werden. Des Weiteren können erfasste Parameterdaten und/oder Analyseergebnisse in die Cloud ausgelagert werden, ggf. um bei späteren Anwendungsfällen darauf zugreifen zu können.

Des Weiteren kann die zentrale Auswertungseinheit gemäß Fig. 1 Steuerungsanweisungen erstellen. Zum Beispiel könnte der MFR derart angewiesen werden, dass ungenutzte Alternativrouten stärker eingesetzt werden. Ferner könnte die zentrale Steuereinrichtung in Form einer zentralen SPS derart instruiert werden, dass stark verschlissene Bauteile einer Fördereinrichtung mit einer geringeren Dynamik verwendet werden. Jedenfalls ist bei dem Ausführungsbeispiel gemäß Fig. 1 eine Anbindung des Fördersystems an eine zentrale Auswertungseinheit realisiert.

Bei dem Ausführungsbeispiel gemäß Fig. 1 basiert die Materialflusssteuerung auf einer SPS-Datenbank, die bis zu 1.000 Datensätze speichern kann. Die Zugriffszeiten zu den Transportdaten liegt daher im Mittel unter 100 ms (Zykluszeit SPS); es kommt zu keinen Verzögerungen oder Wartezeiten auf der Fördertechnik. Durch diese Struktur wird der Datenverkehr zwischen MFR und SPS minimiert, da nicht an jeder Entscheidungsstelle eine Kommunikation erfolgen muss. Die Transportquittungen und Statusmeldungen werden dadurch vom Materialfluss entkoppelt und zeitunkritisch vom Förderablauf an den MFR gemeldet.

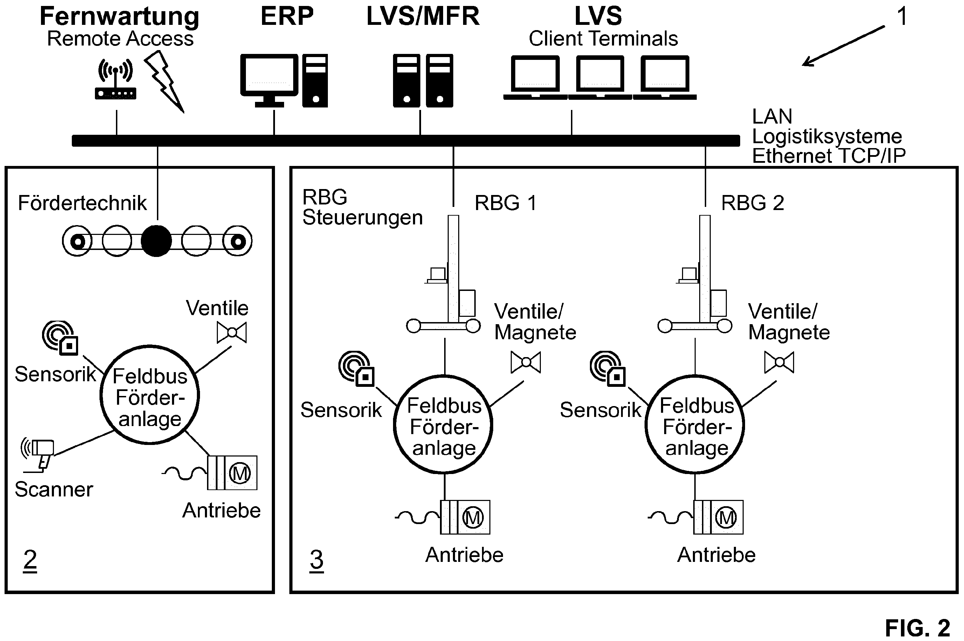

Fig. 2 zeigt in einer schematischen Ansicht ein automatisiertes Fördersystem gemäß einem weiteren Ausführungsbeispiel der Erfindung. Fig. 2 illustriert dabei ein Gesamtsystem 1, das sowohl ein automatisiertes Fördersystem 2 mit einer Förderstrecke als auch ein automatisiertes Warenlagersystem 3 mit Regallager und Regalbediengeräten (RGB) umfasst. Die Regalbediengeräte dienen zum Ein- und/oder Auslagern von Gütern in bzw. aus dem Regallager.

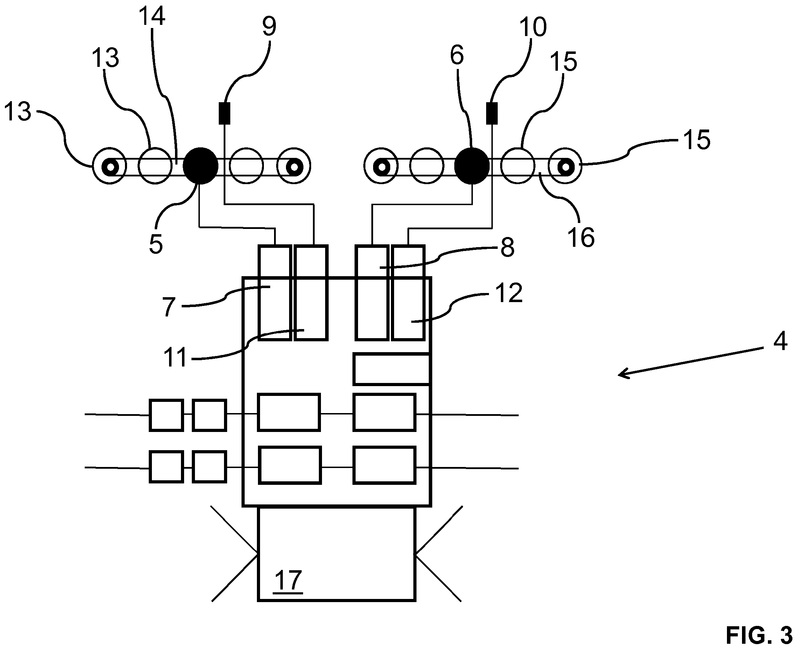

Fig. 3 zeigt in einer schematischen Ansicht ein dezentrales Steuermodul 4 zur Ansteuerung zweier Motorrollen 5 und 6 als Fördereinrichtungen eines automatisierten Fördersystems gemäß einem Ausführungsbeispiel der Erfindung. Das dezentrale Steuermodul 4 koordiniert bzw. steuert die beiden Motorrollen 5 und 6 über die Aktoren 7 und 8. Das Signal der Lichtschranken 9 und 10 wird über die Sensoren 11 und 12 erfasst. Die Tragrollen 13 sind mittels Riemenübertrieb 14 mit der ersten Motorrolle 5 gekoppelt. Die Tragrollen 15 sind entsprechend mittels Riemenübertrieb 16 mit der zweiten Motorrolle 6 gekoppelt. Ferner weist das Steuermodul 4 eine Datenverarbeitungseinrichtung mit Kommunikationsschnittstelle 17 auf, die eine direkte Anbindung an die zentrale Auswertungseinheit bereitstellt.

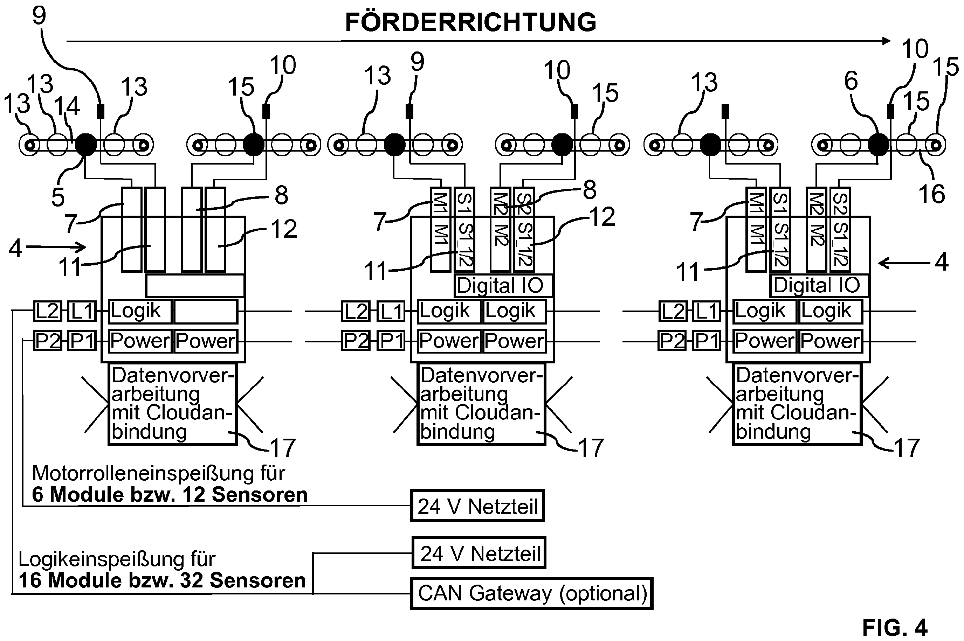

Fig. 4 zeigt in einer schematischen Ansicht mehrere dezentrale Steuermodule gemäß Fig. 3, die zur Ansteuerung von Motorrollen als Fördereinrichtungen eines automatisierten Fördersystems gemäß einem Ausführungsbeispiel der Erfindung vorgesehen sind.

Die Steuerung der gesamten Fördertechnik erfolgt übergeordnet durch den Materialflussrechner (MFR). Die Steuerung der einzelnen Fördereinrichtungen als Fördertechnik-Elemente, wie zum Beispiel Motorrollen und Hebern, erfolgt über zentrale SPSen als zentrale Steuereinrichtungen. Einzelne Motorrollen können dabei zentral direkt über eine zentrale SPS oder alternativ lokal dezentral mit über das dezentrale Steuermodul gesteuert werden. Das dezentrale Steuermodul kann selbstständig ohne Einbindung der zentralen SPS einfachere Steuerungsaufgaben, wie die Auswertung einer Lichtschranke und die Aktivierung einer Motorrolle für eine bestimmte Zeit ausführen.

Mit dem dezentralen Steuermodul erfolgt eine Erfassung der über die Sensoren und/der Aktoren erhältlichen Sensor- und Aktordaten. Damit können erfassbare Werte wie die Schaltzyklen und die Betriebsdauer sowie die Stromaufnahme bereitgestellt, gespeichert und weitergeleitet werden. Dies sind leicht erfassbare Systemparameterdaten, welche ohne umfassend zusätzliche Hardware gewonnen werden können und an die zentrale Auswertungseinheit weitergeleitet werden.

Dezentrale Steuermodule - wie in Fig. 3 und Fig. 4 beispielhaft gezeigt - könnten folgende Daten erfassen und der zentralen Auswertungseinheit zur Verfügung stellen:
- Betriebsstunden der Motorrollen
- Anzahl der Ein- und Ausschaltvorgänge
- Erhöhte Stromaufnahme

Über LVS, MFR und SPS könnten der zentralen Auswertungseinheit folgende Information bzw. Parameterdaten zur Verfügung gestellt werden:
- Behältergewicht (exakte Anzahl schwerer Behälter)
- Umwelteinflüsse (Temperatur, Luftfeuchtigkeit, Staub, etc.)
- Bisherige Wartungsintervalle, letzte Wartung
- Materialfluss aus Barcode-Scanner, Überlastkontrolle

Die von der zentralen Auswertungseinheit empfangenen Daten können unter Verwendung eines geeigneten Algorithmus derart miteinander kombiniert werden, so dass folgende Maßnahmen realisierbar sind:
- Predictive Maintenance
- Bevorzugung wenig ausgelasteter Alternativrouten auf Förderstrecken
- Planung passender Instandhaltungszeiten
- Geplante Stilllegung einer Strecke ohne Staubildung

Des Weiteren kann ein dezentrales Steuermodul - wie in Fig. 3 und Fig. 4 beispielhaft gezeigt - als Edge Gateway fungieren, dass eine Datenreduktion durchführt. Somit ist ein Edge Computing in den dezentralen Steuermodulen der Motorrollenmöglich, das beispielsweise auf Basis eines abgespeckten Mini-Computers mit abgespeckten Linux-System läuft. Da die Messung der Betriebsstunden, Stromaufnahme und Taktungen einer einzigen Motorrolle mehrere tausend Datenpunkte pro Stunde bedeuten können, ist denkbar, dass die Systemparameterdaten in einem zentralen Edge Gateway (können auch mehrere zentrale Gateways sein) vorverarbeitet werden, um das Datenaufkommen gering zu halten.

Ferner ist denkbar, dass jedes dezentrale Steuermodul der Motorrolle - wie in Fig. 3 und Fig. 4 beispielhaft gezeigt - diese Aufgabe übernimmt und nur die aufbereiteten Daten weitersendet, beispielsweise direkt in die zentrale Auswertungseinheit oder über die zentrale SPS-Steuerung indirekt an die zentrale Auswertungseinheit. Somit können, wo sinnvoll, nur konzentrierte Daten an die zentrale Auswertungseinheit gesendet werden. Eine geeignete Datenübertragung bestünde damit beispielhaft aus der Information: "XXXX" Ein- und Ausschaltvorgänge, Schwankung der Stromaufnahme im Leerlauf "X,X" %, max. Stromaufnahme "X,XX" A, Einschaltzeit im Messzeitraum "XX" %, Dauer des Messzeitraums "X" h.

Ein dezentrales Steuermodul kann als "kleiner" Datensammelpunkt einer oder mehrerer Motorrollen und einem oder mehrerer Sensoren zugeordnet sein. Ferner sind dort Netzteile und weitere, nicht in Tragrollen verbaute, Motoren angeschlossen, deren Informationen ebenso erfasst und an die zentrale Auswertungseinheit gesendet werden können, um sie dort oder ggf. in der Cloud zu analysieren.

Hinsichtlich weiterer vorteilhafter Ausgestaltungen des erfindungsgemäßen Verfahrens und des erfindungsgemäßen Fördersystems wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens und des erfindungsgemäßen Fördersystems lediglich zur Erörterung der beanspruchten Lehre dienen, diese jedoch nicht auf die Ausführungsbeispiele einschränken.

### Bezugszeichenliste

- 1: Gesamtsystem
- 2: Fördersystem
- 3: Warenlagersystem
- 4: Steuermodul
- 5: Motorrolle
- 6: Motorrolle
- 7: Aktor/Motor
- 8: Aktor/Motor
- 9: Lichtschranke
- 10: Lichtschranke
- 11: Sensor
- 12: Sensor
- 13: Tragrolle
- 14: Riemen
- 15: Tragrolle
- 16: Riemen
- 17: Kommunikationsschnittstelle

## Patentansprüche

1. Verfahren zur Funktionsüberwachung eines automatisierten Fördersystems mit mindestens einer Förderstrecke für eine Instandhaltung des Fördersystems,
wobei von der Förderstrecke umfasste Fördereinrichtungen mit Sensoren (11, 12) und Aktoren (7, 8) ausgestattet sind, die zur Bewegungsteuerung der Fördereinrichtungen verwendet werden,
wobei die Sensoren (11, 12) und Aktoren (7, 8) der Fördereinrichtungen über mehrere Steuereinrichtungen koordiniert werden, wobei die Steuereinrichtungen dezentrale Steuermodule (4) umfassen,
wobei zur Funktionsüberwachung des Fördersystems Fördereinrichtungszustände bestimmt werden,
wobei Sensor- und/oder Aktordaten von Hardware, die für eine Funktionalität der Fördereinrichtungen erforderlich ist, abgegriffen werden, nämlich von den Sensoren (11, 12) und/oder Aktoren (7, 8) der Fördereinrichtungen, die zur Bewegungssteuerung der Fördereinrichtungen dienen,
wobei die Sensor- und/oder Aktordaten von den dezentralen Steuermodulen (4) erfasst werden und wobei aus den Sensor- und/oder Aktordaten abgeleitete Systemparameterdaten von den dezentralen Steuermodulen bereitgestellt werden,
wobei die Systemparameterdaten sowie vorgebbare Prozessparameterdaten zur Bestimmung der Fördereinrichtungszustände an eine zentrale Auswertungseinheit übermittelt werden, wobei die Prozessparameterdaten aus einem Lagerverwaltungssystem, einem Materialflussrechner und/oder einer zentralen Steuereinrichtung abgegriffen werden,
wobei vorgebbare Umgebungsparameterdaten in Bezug auf die Umgebung der Fördereinrichtungen erfasst werden, wobei die Umgebungsparameterdaten zur Bestimmung der Fördereinrichtungszustände an die zentrale Auswertungseinheit übermittelt werden,
wobei die zentrale Auswertungseinheit die Fördereinrichtungszustände basierend auf den empfangenen Systemparameterdaten, Prozessparameterdaten und Umgebungsparameterdaten mittels einer Analysefunktion ermittelt,
wobei abhängig von einem von der Analysefunktion berechneten Analyseergebnis eine vorgebbare Instandhaltungsmaßnahme eingeleitet wird.

2. Verfahren nach Anspruch 1, **dadurch gekennzeichnet, dass** die Fördereinrichtungen Motorrollen (5, 6), Heber, Gurtförderer, Kettenförderer, Zahnriemenförderer und/oder Gliederbandförderer umfassen.

3. Verfahren nach Anspruch 1 oder 2, **dadurch gekennzeichnet, dass** für die dezentralen Steuermodule (4) ein autonomer und/oder ein nicht-autonomer Betriebsmodus vorgesehen ist.

4. Verfahren nach einem der Ansprüche 1 bis 3, **dadurch gekennzeichnet, dass** von den dezentralen Steuermodulen (4) und/oder von einer zentralen Steuereinrichtung, die von den Steuereinrichtungen umfasst ist, eine Verarbeitung der Sensor- und/oder Aktordaten derart durchgeführt wird, dass die erfassten Sensor- und/oder Aktordaten in aufbereiteter, vorgefilterter, reduzierter und/oder konzentrierter Form als Systemparameterdaten bereitgestellt und/oder gespeichert werden.

5. Verfahren nach einem der Ansprüche 1 bis 4, **dadurch gekennzeichnet, dass** die Sensor- und/oder Aktordaten bzw. die Systemparameterdaten von den dezentraten Steuermodulen (4) direkt an die zentrale Auswertungseinheit übermittelt werden.

6. Verfahren nach einem der Ansprüche 1 bis 5, **dadurch gekennzeichnet, dass** die Sensor- und/oder Aktordaten bzw. die Systemparameterdaten von den dezentraten Steuermodulen (4) indirekt an die zentrale Auswertungseinheit übermittelt werden.

7. Verfahren nach einem der Ansprüche 1 bis 6, **dadurch gekennzeichnet, dass** eines oder mehrere der dezentralen Steuermodule (4) als Edge Gateway fungieren, wobei die Systemparameter über das Edge Gateway an die zentrale Auswertungseinheit gesendet wird.

8. Verfahren nach einem der Ansprüche 1 bis 7, **dadurch gekennzeichnet, dass** die Systemparameterdaten der Fördereinrichtungen Informationen hinsichtlich Betriebsdauer, Schaltzyklen und/oder Stromaufnahme umfassen.

9. Verfahren nach einem der Ansprüche 1 bis 8, **dadurch gekennzeichnet, dass** die Sensor- und/oder Aktordaten der Fördereinrichtungen bzw. die Systemparameterdaten der Fördereinrichtungen lastabhängig erfasst werden.

10. Verfahren nach einem der Ansprüche 1 bis 9, **dadurch gekennzeichnet, dass** zur Übermittlung von Systemparameterdaten, von Prozessparameterdaten und/oder von Umgebungsparameterdaten an die zentrale Auswertungseinheit ein paralleles, vorzugsweise drahtloses, Kommunikationsnetzwerk verwendet wird.

11. Verfahren nach einem der Ansprüche 1 bis 10, **dadurch gekennzeichnet, dass** die zentrale Auswertungseinheit in Form einer oder mehrerer Softwarekomponenten implementiert ist, wobei die Softwarekomponenten die zentrale Auswertungseinheit mittels einem zentralen Rechner und/oder mittels einer Cloud-Platform bereitstellen.

12. Automatisiertes Fördersystem umfassend mindestens eine Förderstrecke, mehrere Steuereinrichtungen und eine zentrale Auswertungseinheit,
wobei die Förderstrecke Fördereinrichtungen umfasst, die zur Bewegungsteuerung der Fördereinrichtungen mit Sensoren (11, 12) und Aktoren (7, 8) ausgestattet sind,
wobei die Steuereinrichtungen dezentrale Steuermodule (4) umfassen,
wobei die Steuereinrichtungen zur Koordination der Sensoren (11, 12) und Aktoren (7, 8) der Fördereinrichtungen der mindestens einen Förderstrecke dienen, und wobei das Fördersystem derart ausgebildet ist,
dass zur Funktionsüberwachung des Fördersystems Fördereinrichtungszustände bestimmt werden,
dass Sensor- und/oder Aktordaten von Hardware, die für eine Funktionalität der Fördereinrichtungen erforderlich ist, abgegriffen werden, nämlich von den Sensoren (11, 12) und/oder Aktoren (7, 8) der Fördereinrichtungen, die zur Bewegungssteuerung der Fördereinrichtungen dienen,
dass die Sensor- und/oder Aktordaten von den dezentralen Steuermodulen (4) erfasst werden und aus den Sensor- und/oder Aktordaten abgeleitete Systemparameterdaten von den dezentralen Steuermodulen (4) bereitgestellt werden,
dass die Systemparameterdaten sowie vorgebbare Prozessparameterdaten zur Bestimmung der Fördereinrichtungszustände an die zentrale Auswertungseinheit übermittelt werden, wobei die Prozessparameterdaten aus einem Lagerverwaltungssystem, einem Materialflussrechner und/oder einer zentralen Steuereinrichtung abgegriffen werden,
dass vorgebbare Umgebungsparameterdaten in Bezug auf die Umgebung der Fördereinrichtungen erfasst werden,
dass die Umgebungsparameterdaten zur Bestimmung der Fördereinrichtungszustände an die zentrale Auswertungseinheit übermittelt werden,
dass die zentrale Auswertungseinheit die Fördereinrichtungszustände basierend auf den empfangenen Systemparameterdaten, Prozessparameterdaten und Umgebungsparameterdaten mittels einer Analysefunktion ermittelt, und
dass abhängig von einem von der Analysefunktion berechneten Analyseergebnis eine vorgebbare Instandhaltungsmaßnahme eingeleitet wird.

## Claims

1. Method for monitoring the function of an automated conveyor system having at least one conveyor path for maintenance of the conveyor system,
wherein conveyor devices which are included by the conveyor path are provided with sensors (11, 12) and actuators (7, 8) which are used to control the movement of the conveyor devices,
wherein the sensors (11, 12) and actuators (7, 8) of the conveyor devices are coordinated by means of a plurality of control devices, wherein the control devices comprise decentralised control modules (4),
wherein conveyor device states are determined for monitoring the function of the conveyor system,
wherein sensor and/or actuator data of hardware which is required for a functionality of the conveyor devices are captured, that is to say, by the sensors (11, 12) and/or actuators (7, 8) of the conveyor devices which are used to control the movement of the conveyor devices,
wherein the sensor and/or actuator data are detected by the decentralised control modules (4) and wherein
system parameter data derived from the sensor and/or actuator data are provided by the decentralised control modules, wherein the system parameter data as well as predeterminable process parameter data are transmitted to determine the conveyor device states to a central evaluation unit, wherein the process parameter data are taken from a bearing management system, a material flow calculator and/or a central control device,
wherein predeterminable environmental parameter data with respect to the environment of the conveyor devices are detected, wherein the environmental parameter data are transmitted to the central evaluation unit in order to determine the conveyor device states,
wherein the central evaluation unit establishes the conveyor device states based on the received system parameter data, process parameter data and environmental parameter data by means of an analysis function,
wherein, depending on an analysis result calculated by the analysis function, a predeterminable maintenance measure is introduced.

2. Method according to claim 1, **characterised in that** the conveyor devices comprise motor rollers (5, 6), lifting mechanisms, belt conveyors, chain conveyors, toothed belt conveyors and/or apron conveyors.

3. Method according to claim 1 or 2, **characterised in that** an autonomous and/or a non-autonomous operating mode is provided for the decentralised control modules (4).

4. Method according to any one of claims 1 to 3, **characterised in that** a processing of the sensor and/or actuator data is carried out by the decentralised control modules (4) and/or by a central control device which is included by the control devices in such a manner that the detected sensor and/or actuator data are provided and/or stored in prepared, pre-filtered, reduced and/or concentrated form as system parameter data.

5. Method according to any one of claims 1 to 4, **characterised in that** the sensor and/or actuator data or the system parameter data are transmitted from the decentralised control modules (4) directly to the central evaluation unit.

6. Method according to any one of claims 1 to 5, **characterised in that** the sensor and/or actuator data or the system parameter data are transmitted from the decentralised control modules (4) indirectly to the central evaluation unit.

7. Method according to any one of claims 1 to 6, **characterised in that** one or more of the decentralised control modules (4) act as an edge gateway, wherein the system parameters are transmitted via the edge gateway to the central evaluation unit.

8. Method according to any one of claims 1 to 7, **characterised in that** the system parameter data of the conveyor devices comprise information items with respect to the duration of operation, switching cycles and/or electric power consumption.

9. Method according to any one of claims 1 to 8, **characterised in that** the sensor and/or actuator data of the conveyor devices or the system parameter data of the conveyor devices are detected in a load-dependent manner.

10. Method according to any one of claims 1 to 9, **characterised in that** a parallel, preferably wireless, communication network is used in order to transmit system parameter data, process parameter data and/or environmental parameter data to the central evaluation unit.

11. Method according to any one of claims 1 to 10, **characterised in that** the central evaluation unit is implemented in the form of one or more software components, wherein the software components provide the central evaluation unit by means of a central computer and/or by means of a cloud platform.

12. Automated conveyor system comprising at least one conveyor path, a plurality of control devices and a central evaluation unit,
wherein the conveyor path comprises conveyor devices which are provided with sensors (11, 12) and actuators (7, 8) in order to control the movement of the conveyor devices, wherein the control devices comprise decentralised control modules (4),
wherein the control devices are used to coordinate the sensors (11, 12) and actuators (7, 8) of the conveyor devices of the at least one conveyor path, and
wherein the conveyor system is constructed in such a manner that,
in order to monitor the function of the conveyor system, conveyor device states are determined,
sensor and/or actuator data from hardware which is required for a functionality of the conveyor devices are captured, that is to say, from the sensors (11, 12) and/or actuators (7, 8) of the conveyor devices which serve to control the movement of the conveyor devices,
the sensor and/or actuator data are detected by the decentralised control modules (4) and system parameter data derived from the sensor and/or actuator data are provided by the decentralised control modules (4),
the system parameter data as well as predeterminable process parameter data are transmitted to the central evaluation unit in order to determine the conveyor device states, wherein the process parameter data are taken from a bearing management system, a material flow calculator and/or a central control device,
predeterminable environmental parameter data are detected with respect to the environment of the conveyor devices,
the environmental parameter data are transmitted to the central evaluation unit in order to determine the conveyor device states,
the central evaluation unit establishes the conveyor device states based on the received system parameter data, process parameter data and environmental parameter data by means of an analysis function, and,
depending on an analysis result calculated by the analysis function, a predeterminable maintenance measure is introduced.

## Revendications

1. Procédé de surveillance du fonctionnement d'un système de transport automatisé avec au moins une section de transport pour une maintenance du système de transport,
dans lequel des dispositifs de transports compris dans la section de transport sont équipés de capteurs (11, 12) et d'actionneurs (7, 8) qui sont utilisés pour le contrôle du déplacement des dispositifs de transport,
dans lequel les capteurs (11, 12) et les actionneurs (7, 8) des dispositifs de transport sont coordonnées par l'intermédiaire de plusieurs dispositifs de commande, dans lequel les dispositifs de commande comprennent des modules de commande décentralisés (4),
dans lequel, pour la surveillance du fonctionnement du système de transport, des états des dispositifs de transport sont déterminés,
dans lequel les données de capteurs et/ou des actionneurs sont relevées par un hardware nécessaire pour un fonctionnement des dispositifs de transport, à savoir par les capteurs (11, 12) et/ou les actionneurs (7, 8) des dispositifs de transport qui permettent le contrôle du déplacement des dispositifs de transport,
dans lequel les données des capteurs et/ou des actionneurs sont relevées par les modules de commande décentralisés (4) et dans lequel des données de paramètres système dérivées des données des capteurs et/ou des actionneurs sont mises à disposition par les modules de commande décentralisés,
dans lequel les données de paramètres système et des données de paramètres de process prédéterminées sont transmises à une unité d'analyse centrale pour la détermination des états des dispositifs de transport, dans lequel les données de paramètres de process sont prélevées d'un système de gestion de stock, d'un calculateur de flux de matériau et/ou d'un dispositif de commande central,
dans lequel des données de paramètres environnementaux prédéterminées concernant l'environnement des dispositifs de transport sont relevées, dans lequel les données de paramètres environnementaux sont transmises à l'unité d'analyse centrale pour la détermination des états des dispositifs de transport,
dans lequel l'unité d'analyse centrale détermine les états des dispositifs de transport sur la base des données de paramètres système, des données de paramètres de process et des données de paramètres environnementaux reçues au moyen d'une fonction d'analyse,
dans lequel, en fonction d'un résultat d'analyse calculé par la fonction d'analyse, une mesure de maintenance prédéterminée est appliquée.

2. Procédé selon la revendication 1, **caractérisé en ce que** les dispositifs de transport comprennent des rouleaux moteurs (5, 6), des vérins, des convoyeurs à courroies, des convoyeurs à chaînes, des convoyeurs à courroies dentées et/ou des convoyeurs à maillons.

3. Procédé selon la revendication 1 ou 2, **caractérisé en ce que**, pour les modules de commande décentralisés (4), un mode de fonctionnement autonome et/ou non-autonome est prévu.

4. Procédé selon l'une des revendications 1 à 3, **caractérisé en ce que** les modules de commande décentralisés (4) et/ou un dispositif de commande central, inclus dans les dispositifs de commande, permettent d'effectuer un traitement des données des capteurs et/ou des actionneurs de façon à ce que les données des capteurs et/ou des actionneurs relevées sont mises à disposition et/ou enregistrées en tant que données de paramètres système sous une forme préparée, pré-filtrée, réduite et/ou concentrée.

5. Procédé selon l'une des revendications 1 à 4, **caractérisé en ce que** les données des capteurs et/ou des actionneurs respectivement les données de paramètres système sont transmises par les modules de commande décentralisés (4) de manière directe à l'unité d'analyse centrale.

6. Procédé selon l'une des revendications 1 à 5, **caractérisé en ce que** les données des capteurs et/ou des actionneurs respectivement les données des paramètres système sont transmises par les modules de commande décentralisés (4) de manière indirecte à l'unité d'analyse centrale.

7. Procédé selon l'une des revendications 1 à 6, **caractérisé en ce qu'**un ou plusieurs des modules de commande décentralisés (4) fonctionnent comme une passerelle Edge Gateway, dans lequel les paramètres système sont envoyés, par l'intermédiaire de la passerelle Edge Gateway, à l'unité d'analyse centrale.

8. Procédé selon l'une des revendications 1 à 7, **caractérisé en ce que** les données des paramètres système des dispositifs de transport comprennent des informations concernant la durée de fonctionnement, les cycles de commutation et/ou la consommation d'électricité.

9. Procédé selon l'une des revendications 1 à 8, **caractérisé en ce que** les données des capteurs et/ou des actionneurs des dispositifs de transport respectivement les données des paramètres système des dispositifs de transport sont relevées en fonction de la charge.

10. Procédé selon l'une des revendications 1 à 9, **caractérisé en ce que**, pour la transmission de données de paramètres système, de données de paramètres de process et/ou de données de paramètres environnementaux à l'unité d'analyse centrale, on utilise un réseau de communication parallèle, de préférence sans fil.

11. Procédé selon l'une des revendications 1 à 10, **caractérisé en ce que** l'unité d'analyse centrale est implémentée sous la forme d'un ou plusieurs composants logiciels, dans lequel les composants logiciels mettent à disposition l'unité d'analyse centrale au moyen d'un ordinateur central et/ou au moyen d'une plate-forme de cloud.

12. Système de transport automatisé comprenant au moins une section de transport, plusieurs dispositifs de commande et une unité d'analyse centrale,
dans lequel la section de transport comprend des dispositifs de transport qui sont équipés de capteurs (11, 12) et d'actionneurs (7, 8), pour le contrôle du déplacement des dispositifs de transport,
dans lequel les dispositifs de commande comprennent des modules de commande décentralisés (4),
dans lequel les dispositifs de commande permettent la coordination des capteurs (11, 12) et actionneurs (7, 8) des dispositifs de transport de l'au moins une section de transport et
dans lequel le système de transport est conçu de façon à ce que
pour la surveillance du fonctionnement du système de transport, des états des dispositifs de transport soient déterminés,
les données de capteurs et/ou des actionneurs soient relevées par un hardware nécessaire pour un fonctionnement des dispositifs de transport, à savoir par les capteurs (11, 12) et/ou les actionneurs (7, 8) des dispositifs de transport qui permettent le contrôle du déplacement des dispositifs de transport,
les données des capteurs et/ou des actionneurs soient relevées par les modules de commande décentralisés (4) et des données de paramètres système dérivées des données des capteurs et/ou des actionneurs soient mises à disposition par les modules de commande décentralisés (4),
les données de paramètres système et des données de paramètres de process prédéterminées soient transmises à une unité d'analyse centrale pour la détermination des états des dispositifs de transport, dans lequel les données de paramètres de process sont prélevées d'un système de gestion de stock, d'un calculateur de flux de matériau et/ou d'un dispositif de commande central,
des données de paramètres environnementaux prédéterminées concernant l'environnement des dispositifs de transport soient relevées,
les données de paramètres environnementaux soient transmises à l'unité d'analyse centrale pour la détermination des états des dispositifs de transport,
l'unité d'analyse centrale détermine les états des dispositifs de transport sur la base des données de paramètres système, des données de paramètres de process et des données de paramètres environnementaux reçues au moyen d'une fonction d'analyse,
en fonction d'un résultat d'analyse calculé par la fonction d'analyse, une mesure de maintenance prédéterminée soit appliquée.
